## Europäisches Patentamt

## European Patent Office

## Office européen des brevets

(19)

(11) Veröffentlichungsnummer: **0 077 411**
**B1**

(12)

# EUROPÄISCHE PATENTSCHRIFT

(45) Veröffentlichungstag der Patentschrift:
08.04.87

(51) Int. Cl.⁴: **B 01 D 23/24**

(21) Anmeldenummer: 81108514.1

(22) Anmeldetag: 19.10.81

(54) Verfahren zum Beseitigen von Feststoffen aus einer Flüssigkeit.

(43) Veröffentlichungstag der Anmeldung:
27.04.83 Patentblatt 83/17

(45) Bekanntmachung des Hinweises auf die Patenterteilung:
08.04.87 Patentblatt 87/15

(84) Benannte Vertragsstaaten:
AT BE CH DE FR GB LI NL SE

(56) Entgegenhaltungen:
AT-B-360 443
DE-A-2 758 400
DE-A-3 013 033
US-A-4 162 216

(73) Patentinhaber: **Linde Aktiengesellschaft, Abraham-Lincoln- Strasse 21, D-6200 Wiesbaden (DE)**

(72) Erfinder: **Hartgrove, Earl Henderson, 9314 Tiverton Way, Louisville Kentucky 40222 (US)**
Erfinder: **Nelson, Robert Francis, 134, Ruthlawn Drive, S. Charleston, W.Va. 25309 (US)**
Erfinder: **Romagnoli, Ronald Joseph, 5310 Edgebrook Road, Charleston West Virginia 25312 (US)**

(74) Vertreter: **Schaefer, Gerhard, Dr., Linde Aktiengesellschaft Zentrale Patentabteilung, D-8023 Höllriegelskreuth (DE)**

EP 0 077 411 B1

## Beschreibung

Die Erfindung betrifft ein Verfahren zum Regenerieren eines zum Beseitigen von Feststoffen aus einer suspendierte Feststoffe enthaltenden Flüssigkeit dienenden Filterbetts aus Polyurethanteilchen, bei dem nach einer mindestens teilweisen Beladung des Filterbetts mit abgeschiedenen Feststoffen eine Regenerierflüssigkeit in den Filterbehälter eingeleitet wird, die Regenerierflüssigkeit und die Polyurethanteilchen zumindest zeitweise mechanisch in dem Maß durcheinander bewegt werden, daß die abgeschiedenen Feststoffe sich von den Polyurethanteilchen lösen und in die Regenerierflüssigkeit unter Bildung einer an Feststoffen angereicherten Regenerierflüssigkeit übergehen, und bei dem anschließend eine an Feststoffen angereicherte Regenerierflüssigkeit aus dem Filterbehälter abgezogen wird.

Auf dem Gebiet der Flüssigkeits- und Abwasserbehandlung stellt die Filtration seit langem eines der Hauptverfahren zur Beseitigung von Schwebstoffen aus Flüssigkeitsströmen dar. Insbesondere bei der Abwasserbehandlung ist das Vorhandensein von Schwebstoffen häufig ein größeres Problem. Die Filtration wurde in großem Umfang eingesetzt, um die Schwebstoffkonzentration in Flüssigkeitsströmen, beispielsweise kommunalem Abwasser und zur Wiederverwendung bestimmten Abwasser, zu vermindern und/oder zu beseitigen. Bei derartigen Anwendungen wurden mit fallender und steigender Strömung arbeitende Sandfilter und Zweimedien oder Mischmedienfilter in erheblichem Umfang benutzt. Sie erwiesen sich im allgemeinen als kosteneffektiv und wirkungsvoll im Einsatz. Dessen ungeachtet haben praktische Erfahrungen gezeigt, daß Sand- und Mischmedienfilter zwar in der Regel Schwebstoffe wirkungsvoll beseitigen, daß dies aber nur unter begrenzten Feststoffbeladungsbedingungen gilt. In der Regel muß die Feststoffkonzentration des in das Filter eintretenden Flüssigkeitsstromes unter etwa 100 bis 200 mg/l liegen. Bei Schwebstoffkonzentrationswerten oberhalb dieses Grenzwertes neigt das Filterbett zu Verstopfungen; an dem Filterbett tritt ein hoher Druckabfall auf.

In den letzten Jahren wurden die Filtriervorgänge bei den vorstehend genannten Anwendungen durch die Benutzung von Polyurethan als Filtrationsmedium etwas verbessert. Im allgemeinen wird Polyurethanschaum in kleine Stücke geschnitten und in einen Aufnahmebehälter zur Bildung des Filterbettes eingebracht. Abwasser oder eine andere Schwebstoffe enthaltende Flüssigkeit wird dann durch das Bett hindurchgeführt, wobei Schwebstoffe auf den Polyurethanteilchen abgesetzt werden. Die Schwebstoffe verbleiben auf diese Weise auf den Polyurethanteilchen. Die Flüssigkeit, aus der die Schwebstoffe ausgeschieden sind, durchläuft anschließend das Bett und wird als Flüssigkeit ausgetragen, die an suspendierten festen Schmutzstoffen verarmt ist.

Im allgemeinen führt der Einsatz von Polyurethanschaum als Filtrationsmedium zu zahlreichen betriebstechnischen Vorteilen gegenüber Betten, bei denen Sand oder konventionelle Mischmedien-Filtrationsstoffe vorgesehen sind. Dazu gehören höhere Feststoffaufnahmefähigkeit, niedrigere Druckabfallverluste, größere Widerstandsfähigkeit gegenüber Verstopfung und Beseitigung von zahlreichen, löslichen, organischen Schmutzstoffen aus dem Flüssigkeitsstrom.

Trotz der vielen betriebstechnischen Vorteile blieb jedoch die Regenerierung des Polyurethanschaums, der bei dem Filtrationsvorgang mit suspendierten Feststoffen beladen wurde, ein schwieriges Problem. Es wurden verschiedenartige Methoden in Betracht gezogen, um das Polyurethanschaumfilterbett zu regenerieren, das mit Schwebstoffen während des Filtriervorganges mindestens teilweise beladen wurde. Dazu gehören das Rückspülen mit einem an Feststoffen verarmten Flüssigkeitsstrom, ein Verfahren, wie es allgemein bei konventionellen Sand- und Mischmedienfiltrationssystemen angewendet wird. Bei einem Polyurethanschaum-Filterbett stellt jedoch das Rückspülen ein besonders Problem infolge der geringen Dichte des Polyurethanschaum-Filtrationsmediums dar. Weil Polyurethanschaum eine wahre Dichte bis herab zu 16 bis 32 kg/m³ haben kann, ist es in normalem Betrieb in der Regel erwünscht, Schwebstoffe enthaltende Flüssigkeit durch das Bett aus Polyurethanschaumstoff nach unten gerichtet hindurchzuleiten. Ein Rückspülen eines solchen Filterbettes, bei dem ein Strom aus reiner Flüssigkeit im Gegenstrom nach oben durch das Filterbett hindurchgeführt wird, erfordert für gewöhnlich so hohe Strömungsgeschwindigkeiten durch das Bett, daß Polyurethanschaumteilchen aus dem Bett herausgewaschen werden oder daß es zu einem Aufreißen des Bettes kommt, wodurch große Hohlräume im Bett verbleiben, die zu Kurzschlüssen und anderen nachteiligen Verhaltensweisen während des anschließenden Filtrationsvorganges Anlaß geben. Wenn andererseits das Bett aus Polyurethanschaum in der gleichen Weise regeneriert wird, wie der normale Filtrationsvorgang abläuft, d.h., indem ein Strom an Feststoffen verarmter Flüssigkeit nach unten durch das mit Feststoffen beladene Bett hindurchgeleitet wird, ist es in der Regel schwierig, Schwebstoffe in ausreichendem Maße von den Polyurethanteilchen abzuspülen, um das Bett für die anschließende Filtrationsstufe in befriedigender Weise zu erneuern. Außerdem hat sich gezeigt, daß das Rückspülen allgemein nicht effektiv genug ist, um die ursprüngliche Feststoffaufnahmefähigkeit des Polyurethanschaums wieder herzustellen.

Angesichts der vorstehend genannten Schwierigkeiten bei der Anwendung des konventionellen Rückspülens im Falle eines Polyurethanschaum-Filterbettes sowie mit Rücksicht auf die extrem niedrige Dichte des Polyurethanschaum-Filtrationsmediums im Vergleich zu konventionellen Medien werden verschiedene Maßnahmen für eine Kompressionsregenerierung des Polyurethanschaums in dem Filterbett vorgeschlagen. Bei einer solchen Kompressionsregenerierung werden in der Regel mechanische Mittel eingesetzt, um die Teilchen aus Polyurethanschaum "auszupressen" und dadurch das darin enthaltene Wasser zusammen mit den abgeschiedenen Feststoffen aus den Polyurethanteilchen "auszuwringen". Obwohl ein solches Regenerierverfahren bei einer Filtrationseinheit im Labor oder Versuchsmaßstab leicht durchführbar ist, haben die mechanische Kompliziertheit und die damit verbundenen Investitionskosten für ein Auspressen der Schaumteilchen in Polyurethanfilterbetten von industriellem Maßstab den Einsatz von Polyurethanschaum-Filterbetten in der Praxis erheblich beschränkt.

Die AT-B-360 434 beinhaltet ein Verfahren zum Regenerieren eines Filterbettes aus hochelastischem, gemahlenem Kunststoffschaum, bei dem es entscheidend darauf ankommt, daß der Kunststoffschaum für die Filterwirkung zusammengepreßt wird und während der Regenerierwirkung entspannt wird. Als zusätzliche Maßnahme kann dabei Luft in den Filterbereich eingeleitet werden. Jedoch wird auch in diesem Fall keine Regenerierflüssigkeit verwendet, sondern die zu behandelnde Flüssigkeit wird für den Filtervorgang von unten nach oben durch den Filterbehälter gepumpt und für den Regeneriervorgang von oben nach unten durch den Filterbehälter geleitet, wobei ein aufwendiges Pumpen- und Rohrleitungssystem erforderlich ist. Außerdem können auf diese Weise nur gering mit suspendierten Feststoffen beladene Flüssigkeiten im Filter gereinigt werden, da ansonsten während des Regeneriervorganges kein Konzentrationsausgleich mehr zwischen Kunststoffschaumteilchen und Flüssigkeit in Bezug auf die Feststoffe möglich ist.

Aus der US-A 4 162 216 ist ein anderes mechanisches Verfahren zum Regenerieren eines Filterbettes aus diskontinuierlichen Polyurethanteilchen bekannt. Zur Erneuerung des Filterbettes werden nach diesem Patent die abgeschiedenen Feststoffe von den Polyurethanteilchen entfernt, indem mindestens ein Bettvolumen einer Regenerationsflüssigkeit dem Filtrierbehälter zugesetzt wird und das Filterbett aus Polyurethanteilchen in einem in dem Filtrierbehälter befindlichen Gesamtflüssigkeitsvolumen mechanisch durchgemischt wird, das die Regenerationsflüssigkeit und die in dem Filterbett beim Abschalten des Zulaufs zurückgehaltene Flüssigkeit umfaßt, so daß sich eine an Feststoffen angereicherte Flüssigkeit bildet, die aus dem Filtrierbehälter abgezogen wird. Hierbei wird das Durcheinanderbewegen der Regenerierflüssigkeit und der Polyurethanteilchen ausschließlich auf mechanischem Wege mit Hilfe einer Rührvorrichtung durchgeführt. Obwohl dieses Verfahren im allgemeinen in der Praxis befriedigende Ergebnisse bringt, hat es doch den Nachteil, daß ein ständiges, mechanisches Durchmischen der Gesamtflüssigkeit erforderlich ist, was sowohl die Investitions- als auch die Betriebskosten des Filtrationssystems erhöht.

Darüber hinaus ist dabei entscheidend, daß die einzelnen Parameter sowohl der Polyurethanteilchen als auch des Gaseintrags sowie des Abziehens der mit Feststoffen beladenen Regenerierflüssigkeit aufeinander abgestimmt sind. Dabei ist es erforderlich, daß die Luftzufuhrrate und die Menge der Regenerierflüssigkeit so eingestellt werden, daß sich eine vollständige Durchmischung im Filterbehälter ergibt. Weitergehend ist es aber auch erforderlich, die Porosität und die Luftdurchlässigkeit der Polyurethanteilchen auf die Gasmenge abzustimmen, da großporige Polyurethanteilchen mit entsprechend wenig Poren und einer hohen Luftdurchlässigkeit mehr Gas ungehindert durchlassen als feinporige Polyurethanteilchen mit einer großen Porenzahl und einer geringen Luftdurchlässigkeit. Abgesehen davon weist ein großporiger Polyurethanschaum eine schlechte Filterwirkung auf, während bei einem kleinporigen Polyurethanschaum die Gefahr einer Verstopfung der offenen Zellen durch die auszufiltrierenden Feststoffe gegeben ist. Schließlich ist die Abzugsgeschwindigkeit der beladenen Regenerierflüssigkeit entscheidend, ob sich die in die Regenerierflüssigkeit abgeschiedenen Feststoffe bei einem zu langsamen Abziehen der Regenerierflüssigkeit erneut an den Polyurethanteilchen anlagern.

Aufgabe der vorliegenden Erfindung ist es, ein verbessertes Verfahren zum Beseitigen von abgeschiedenen suspendierten Feststoffen von Polyurethanteilchen in einem Filterbett mit Polyurethanteilchen bereitzustellen, das sich im Vergleich zu den bekannten Verfahren als wesentlich kostengünstiger erweist.

Diese Aufgabe wird erfindungsggemäß dadurch gelöst, daß das 1- bis 5-fache des Bettvolumens an Regenerierflüssigkeit in den Filterbehälter eingeleitet wird, zum Durcheinanderbewegen von Regenerierflüssigkeit und Polyurethanteilchen durch die Regenerierflüssigkeit ein Gas in einer Menge von 0,15 bis 1,5 Querschnittsfläche des Filterbettes durchgeblasen wird, zur Bildung des Filterbettes Polyurethanteilchen aus offenporigem Polyurethanschaum mit 4 bis 40 Zellen/ cm und mit einer Luftdurchlässigkeit von 24 bis 76 m$^3$ Luft/min m$^3$ verwendet werden und daß das Abziehen der an Feststoffen angereicherten Regenerierflüssigkeit aus dem Filterbehälter in einer Menge von 4 bis 16 Querschnittsfläche des Filterbettes durchgeführt wird.

Entsprechend einer bevorzugten Ausführungsform der Erfindung ist vorgesehen, daß das Gas in einer Menge von 0,3 bis 0,6 m³ pro Minute m² Querschnittsfläche des Filterbettes durch dieses durchgeblasen wird.

Bevorzugt werden weiterhin nacheinander mehrere Regenerationszyklen, vorzugsweise zwei bis vier aufeinanderfolgende Regenerationszyklen, durchgeführt. Nach einer vorteilhaften Ausgestaltung des erfindungsgemäßen Verfahrens wird beim letzten Regenerationszyklus nur so viel von der an Feststoffen angereicherten Regenerierflüssigkeit abgezogen, daß nicht mehr als ein Bettvolumen an mit Feststoffen angereicherter Regenerierflüssigkeit in dem Filtrierbehälter verbleibt, und daß die Polyurethanteilchen mit ein bis fünf Bettvolumen, vorzugsweise ein bis zwei Bettvolumen, an suspendierte Feststoffe enthaltender, zulaufender Flüssigkeit vor Wiederbeginn des Filtrationsvorganges gespült werden.

Unter "Bettvolumen" wird eine Volumeneinheit an Flüssigkeit verstanden, die gleich dem Volumen des Filterbettes ist. In der Praxis kann die Regenerierflüssigkeit teilweise aus der in dem Filterbett beim Abschalten des Zulaufes zurückgehaltenen Flüssigkeit bestehen. Der Begriff "in dem Filterbett zurückgehaltene Flüssigkeit" bezieht sich auf die Flüssigkeit, die sich zwischen den Polyurethanteilchen befindet, sowie auf die Flüssigkeit, die in den Poren der Polyurethanteilchen im Filterbett zurückgehalten wird, nachdem der Flüssigkeitsstrom durch das Filterbett hindurch abgeschaltet ist.

Die Erfindung sei im folgenden anhand von bevorzugten Ausführungsbeispielen näher erläutert.

Es zeigen:

Figur 1 eine schematische Darstellung eines Filtrationssystems mit einem Filterbett mit Polyurethanteilchen und

Figur 2 eine schematische Darstellung eines anderen Filtrationssystemes, bei dem die Regenerierung der Polyurethanteilchen in einem gesonderten Regenerierbehälter durchgeführt wird.

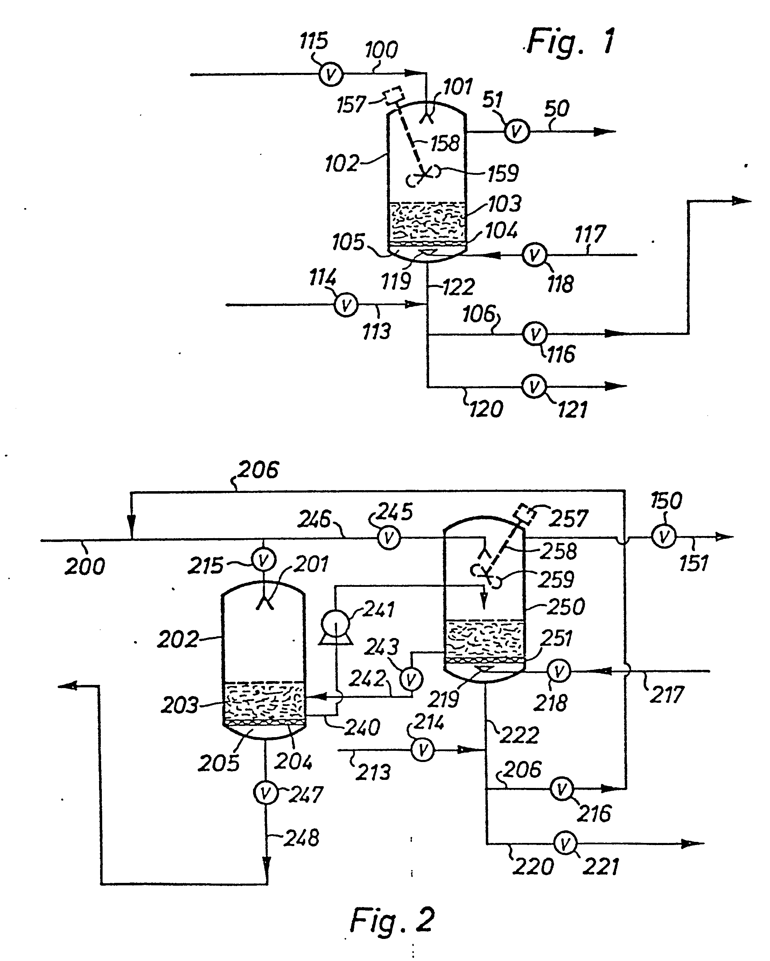

Entsprechend Figur 1 tritt Flüssigkeit, die suspendierte Feststoffe (Schwebstoffe) enthält, in das Behandlungssystem über eine Leitung 100 ein, in der ein Regelventil 115 liegt, das während der anfänglichen Betriebsphase offen ist. Diese Flüssigkeit kann von einer Vielzahl von Quellen stammen. Sie kann beispielsweise von einer biologischen Behandlungsanlage kommen und 40 bis 60 ppm Schwebstoffe aufweisen; es kann sich aber auch um Flußwasser handeln, das einer kommunalen Wasseraufbereitungsanlage zugeführt wird. In anderen Fällen kann die Flüssigkeit Rohwasser sein, das für Kessel oder eine interne Anwendung in einer industriellen Anlage bestimmt ist. Es kann ferner ein Flüssigkeitsstrom von einem Algenteich (Oxidationsgraben) sein, der behandelt wird, um zu vermeiden, daß Flocken aus Nadelalgen den Vorfluter erreichen.

Von der Leitung 100 gelangt die Flüssigkeit in einen Filtrierbehälter 102. Sie wird in das obere Ende dieses Behälters über einen Sprühverteiler oder eine andere Abgabevorrichtung 101 eingebracht. Der Filtrierbehälter 102 kann zweckmäßig aus C-Stahl oder einem anderen Baumaterial aufgebaut sein und ist teilweise mit einem Filterbett mit Polyurethanteilchen 103 gefüllt. Der Filtrierbehälter hat ein oberes Einlaßende und ein unteres Auslaßende. Das Filterbett aus Polyurethanteilchen wird innerhalb des Behälters von einer Unterlage 104 abgestützt, bei der es sich zweckmäßig um ein Gitter oder Sieb aus feinem Maschenmaterial oder dergleichen handeln kann. Auf diese Weise wird am unteren Ende des Behälters 102 ein Füllraum 105 gebildet, in dem die Flüssigkeit gesammelt wird, die durch das Filterbett hindurchgelaufen ist.

Die Schwebstoffe enthaltende Flüssigkeit wird durch das in dem Filtrierbehälter befindliche Filterbett von dem oberen Einlaßende zum unteren Auslaßende hindurchgeführt, um die Feststoffe aus der Flüssigkeit auf den Polyurethanteilchen abzulagern und damit die Feststoffe mittels des Filterbettes wirkungsvoll zu beseitigen. Auf diese Weise wird eine an Feststoffen verarmte Flüssigkeit gebildet, die sich in dem unteren Füllraum 105 sammelt und die aus dem Filtrierbehälter über eine Leitung 106 abgezogen wird, in der ein offenes Regelventil 116 angeordnet ist. Von der Leitung 106 gelangt die an Feststoffen verarmte Flüssigkeit zum Vorfluter und/oder zu anderen Behandlungs- oder Endverbrauchsstellen.

Der oben beschriebene, Schwebstoffe enthaltende Flüssigkeitsstrom wird aufrechterhalten, bis das Filterbett mit abgeschiedenen Feststoffen mindestens teilweise beladen ist. Daraufhin wird der Flüssigkeitsstrom durch das Filterbett hindurch abgeschaltet. Das Filterbett ist für eine Erneuerung bereit.

Um die Feststoffsammel- und -beseitigungsleistung des Filterbettes bei dem oben beschriebenen System zu verbessern, kann es in manchen Fällen zweckmäßig sein, ein Koagulierungsmittel, beispielsweise ein organisches Polymerkoagulierungsmittel, Natriumsilikat oder Alaun, zu der Flüssigkeit zuzugeben, die in das Filterbett eingeleitet wird. Solche Koagulierungsmittel sind bei einigen Anwendungen erwünscht, um die Flockenbildung der Schwebstoffe in der behandelten Flüssigkeit zu verstärken und die Trübung der Flüssigkeit zu vermindern, die das Filterbett-Behandlungssystem verläßt.

Die bei dem vorliegenden Filterbett vorgesehenen Polyurethanteilchen können aus einem beliebigem zweckentsprechenden Schaumstoff bestehen, der das erforderliche Feststoff-Beladevermögen für die vorgesehene Dauer der Filtrationsphase hat. Das diskontinuierliche Polyurethan der Teilchen des Filterbettes kann in Form von geshredeten Teilchen ungleichförmiger Größe vorliegen. Die Polyurethanteilchen des Filterbettes können auch eine kubische Form haben, wie sie beispielsweise erhalten wird, wenn ein Körper aus Polyurethanschaum in kleine Partikel zerschnitten wird, beispielsweise Kuben mit Seitenlängen von 6 mm bis 26 mm. Geeigneter Polyurethanschaumstoff, der in der Praxis mit Erfolg eingesetzt wurde, ist z.B. Ester-oder Äthervernetzter Polyurethanschaum mit einer Zelldichte zwischen 4 und 40 Zellen/cm, vorzugsweise 12 bis 24 Zellen/cm. Offenporige vernetzte oder nichtvernetzte Polyurethanschaumstoffe, die sich zur Bildung der Polyurethanteilchen der Filterbetten eignen, sollten eine Luftdurchlässigkeit von 24 bis 76 $m^3$ Luft/min $m^2$, vorzugsweise von 30 bis 52 $m^3$ L/min $m^2$ besitzen. Der hier verwendete Wert der Luftdurchlässigkeit des Polyurethanschaums basiert auf der Fließgeschwindigkeit von Luft bei 23° und 50% Luftfeuchtigkeit. Durchströmt Luft ein Polyurethanschaumstück von 12,7 mm Höhe und einer Querschnittsfläche von 127 mm x 127 mm (senkrecht zur Strömungsrichtung der Luft) bei einem Einlaßdruck von 1 bar, so entsteht ein Druckunterschied von 2,5 x $10^{-4}$ bar zwischen dem Aufwärtsstrom und dem Abwärtsstrom der Luft über dem Polyurethanschaumstück. Der numerische Wert der Luftdurchlässigkeit wird als der Wert der oben bestimmten Fließgeschwindigkeit in $m^3$/min $m^2$ Querschnittsfläche des Filterbettes bestinmt. Die wahre Dichte der Polyurethanteilchen in dem Filterbett sollte vorzugsweise größer als etwa 21 $kg/m^3$ sein, um für ein Bett ausreichender Festigkeit zu sorgen. Die Polyurethanteilchen im Filterbett haben vorzugsweise ein Feststoffbeladungsvermögen von mindestens 8 kg Schwebstoffen/$m^3$ Polyurethanteilchen, um für eine zweckentsprechende hohe Kapazität an Feststoffbeladung während der Filtrationsphase zu sorgen. Beispielsweise kann ein geeigneter Polyurethanschaumstoff für das vorliegende Verfahen in geshredeter Form vorliegen, wobei die Teilchengröße bei 25 bis 51 mm liegt, 12 Zellen/cm vorgesehen sind, die Teilchendicke in der Größenordnung von 0,6 mm liegt, die wahre Dichte (gemessen ohne Hohlräume) bei etwa 28 kg pro $m^3$ liegt und die Zugfestigkeit 16,2 $N/cm^2$ beträgt.

Während des Filtriervorganges wird die volumetrische Strömungsgeschwindigkeit der Schwebstoffe enthaltenen Flüssigkeit durch das Filterbett zweckmäßig zwischen 0,4 bis 4,1 l/min $dm^2$ Querschnittsfläche des Filterbettes gehalten, um für einen ausreichenden Kontakt der Flüssigkeit mit dem Polyurethanteilchen im Filterbett zu sorgen, ohne daß es zu Kurzschlüssen oder anderen abnormalen Strömungsphänomenen kommt. Nachdem das Filterbett mit abgesetzten Feststoffen mindestens teilweise beladen ist, wird der Flüssigkeitsstrom durch das Filterbett hindurch abgeschaltet, indem die Ventile 115 und 116 in den Leitungen 100 bzw. 106 geschlossen werden. Anschließend werden abgesetzte Feststoffe von den Polyurethanteilchen im Filterbett entfernt, wodurch das Filterbett für eine Feststoffbeseitigung aus der suspendierte Feststoffe enthaltenden Flüssigkeit erneuert wird.

Nach dem Abschalten des das Filterbett durchlaufenden Flüssigkeitsstromes verbleibt zurückgehaltene Flüssigkeit in dem Filterbett. Diese zurückgehaltene Flüssigkeit kann aus einem größeren Teil eines Bettvolumens an Flüssigkeit bestehen. Dies ist auf die hohe Porosität des Filterbettes aus Polyurethanteilchen zurückzuführen. Beispielsweise kann die Porosität des Filterbettes aus Polyurethanteilchen in der Größenordnung von 80 % liegen, so daß der Filtrierbehälter beim Abschalten des Flüssigkeitsstromes durch das Filterbett 0,80 Bettvolumen an zurückgehaltener Flüssigkeit als Lückenvolumenflüssigkeit zwischen den Polyurethanteilchen und als Flüssigkeit in den Poren der Polyurethanteilchen des Filterbettes enthält. Bei manchen Anwendungsfällen kann es wünschenswert sein, aus dem Filterbett die gesamte Flüssigkeit abzuziehen. Dies kann beispielsweise auf die Weise erfolgen, daß Ventil 116 eine ausreichende Verzögerungszeit nach Schließen von Ventil 115 schließt, damit die Flüssigkeit in dem Filterbett vollständig über Leitung 106 abgezogen werden kann.

Zum Regenerieren der Filterbett-Polyurethanteilchen werden über eine Leitung 113 mit geöffnetem Ventil 114 ein bis fünf Bettvolumen an Regenerierflüssigkeit auf das Filterbett, das die mindestens teilweise mit abgeschiedenen Feststoffen beladenen Polyurethanteilchen enthält, aufgegeben. Die durch Leitung 113 eintretende Regenerierflüssigkeit kann von einer fremden Quelle einer "sauberen" Flüssigkeit kommen. Alternativ kann es sich bei der Regenerierflüssigkeit um eine an Feststoffen verarmte, aus dem Filterbett rückgeführte Flüssigkeit handeln, die während des Filtrationsvorganges gesammelt worden ist. Bei derartigen Quellen der Regenerierflüssigkeit ist es von Vorteil, wenn die Regenerierflüssigkeit weniger als 150 mg suspendierte Feststoffe/l enthält. Die Regenerierflüssigkeit kann auch aus zulaufender Flüssigkeit bestehen, die in den Filtrierbehälter über die Leitung 100 eingespeist wird. In diesem Fall kann Leitung 113 mit Ventil 114 entfallen. In dem System gemäß Figur 1 werden erfindungsgemäß ein bis fünf Bettvolumen an Regenerierflüssigkeit über Einlaßleitung 113 und Leitung 122 in den Filtrierbehälter 102 eingespeist und anschließend Ventil 114 geschlossen. Das Umschalten der verschiedenen Ventile kann mit Hilfe einer bekannten Taktzeitsteuerung erfolgen.

Nachdem die Regenerierflüssigkeit in den Filtrierbehälter 102 eingebracht ist, werden alle Ventile geschlossen. Dann wird Ventil 118 in der Gaszuführungsleitung 117 geöffnet und Gas gelangt über Leitung 117 zum Verteiler 119, der in dem Füllraum 105 des Filtrierbehälters 102 angeordnet ist. Von dort wird durch die Regenerierflüssigkeit das Gas in einer solchen Menge geblasen, daß die Regenerierflüssigkeit und die Polyurethanteilchen durcheinander bewegt werden und die abgeschiedenen Feststoffe sich von den Polyurethanteilchen lösen und in die Regenerierflüssigkeit unter Bildung einer an Feststoffen angereicherten Regenerierflüssigkeit übergehen. Das über Leitung 117 zugeführte Durchblasegas ist zweckmäßig Luft. Ein Entlüftungsventil 51 ist in einer Entlüftungsleitung 50 am oberen Ende des Filtrierbehälters 102 angebracht. Über das Entlüftungsventil 51 kann ein im Filtrierbehälter infolge des Durchblasens mit Luft auftretender Überdruck vermindert werden. Nach einer bevorzugten Verfahrensweise wird das Gas 0,5 bis 5 Minuten lang in einer Menge von 0,15 bis 1,5 m³/min m² Querschnittsfläche des Filterbettes durch die Polyurethanteilchen enthaltende Regenerierflüssigkeit durchgeblasen. Für den Fall, daß Wasser mit wenig Feststoffen, z.B. 200 mg/l, filtriert werden soll, ist es zweckmäßig, während des Regeneriervorganges das Gas 1 bis 2 Minuten lang in einer Menge von 0,3 bis 0,6 m³/min m² Querschnittsfläche des Filterbettes durch die Regenerierflüssigkeit durchzublasen.

Nach der vorliegenden Erfindung besteht auch die Möglichkeit, gegebenenfalls zusätzlich zu dem Durchblasen des Gases die Regenerierflüssigkeit und die Polyurethanteilchen mit Hilfe einer gestrichelt dargestellten Rührvorrichtung mit Flügeln 159, die über eine Welle 158 mit einem Antriebsmotor 157 verbunden sind, mechanisch durcheinander zu bewegen, so daß die abgeschiedenen Feststoffe sich von den Polyurethanteilchen lösen und in die Regenerierflüssigkeit unter Bildung einer an Feststoffen angereicherten Regenerierflüssigkeit übergehen. Dabei kann das Gas die die Polyurethanteilchen enthaltende Regenerierflüssigkeit während der gesamten Dauer des mechanischen Bewegens der Regenerierflüssigkeit durchblasen. Alternativ kann das Gas auch nur während der Anfangszeit des mechanischen Bewegens durch die Regenerierflüssigkeit durchgeblasen werden, je nach Notwendigkeit und Wunsch bei einem gegebenen Anwendungsfall.

Nachdem durch das Durchblasen des Gases bewirkten und gegebenenfalls zusätzlichen mechanischen Bewegens der Regenerierflüssigkeit und der Polyurethanteilchen während der hierfür erforderlichen Zeit, wird das mechanischen Bewegen der Regenerierflüssigkeit mit dem Polyurethanteilchen beendet, in dem die mechanische Rührvorrichtung deaktiviert wird und unmittelbar danach wird Ventil 121 in Leitung 120 geöffnet und die mit Feststoffen angereicherte Regenerierflüssigkeit über Leitung 122 und Auslaßleitung 120 aus den Filtrierbehälter 102 abgezogen. Bei der praktischen Anwendung des erfindungsgemäßen Verfahrens hat es sich als vorteilhaft erwiesen, die mit Feststoffen angereicherte Flüssigkeit aus dem Filterbett in einer Menge von 4 bis 16 l/min dm² Querschnittsfläche des Filterbettes, vorzugsweise in einer Menge von 8 bis 12 l/min dm² Querschnittsfläche des Filterbettes, abzuziehen. Die mit Feststoffen angereicherte Regenerierflüssigkeit, die über Leitung 120 als Abwasserablauf abgezogen wird, kann anschließend weiteren Behandlungsstufen, wie einer Entwässerung, zugeführt werden. Nach dem Abziehen der Regenerierflüssigkeit aus dem Filtrierbehälter werden die entile 121 und 118 geschlossen. Bei einigen Anwendungen wird das Filterbett mit dem Polyurethanteilchen mit Hilfe der vorerwähnten Regenerationsschritte in solchem Maße gereinigt, daß anschließend der normale Filtrationsvorgang wieder beginnen kann; bei anderen Anwendungen kann es dagegen wünschenswert sein, die vorerwähnten Regenerationsschritte nacheinander als aufeinanderfolgende Regenerationszyklen zu wiederholen. Normalerweise müssen nicht mehr als zwei bis vier Regenerationszyklen durchgeführt werden. Wenn mehrere Regenerationszyklen durchgeführt werden, ist es von Vorteil, wenn beim letzten Regenerationszyklus nur soviel von der an Feststoffen angereicherten Regenerierflüssigkeit abgezogen wird, daß nicht mehr als ein Bettvolumen an mit Feststoffen angereicherter Flüssigkeit in dem Filtrierbehälter verbleibt, und die Polyurethanteilchen mit ein bis fünf Bettvolumen, vorzugsweise mit ein bis zwei Bettvolumen, an suspendierte Feststoffe enthaltender, zulaufender Flüssigkeit vor Wieder beginn des Filtrationsvorganges gespült werden. Für die Spülphase wird Ventil 115 geöffnet und suspendierte Feststoffe enthaltende, zulaufende Flüssigkeit durch das Filterbett geleitet, und entweder über Leitung 106 (bei geöffnetem Ventil 116) geführt und unmittelbar in die Einlaßleitung 100 zurückgeführt. Alternativ kann die zum Spülen verwendete zulaufende Flüssigkeit auch über die Abwasserableitung 120 (bei geöffnetem Ventil 121) geführt werden. Die Spülphase wird bevorzugt durchgeführt, um restliche suspendierte Feststoffe aus den Zwischenräumen (Poren) der Polyurethanteilchen im Filterbett zu entfernen und das Filterbett für den nachfolgenden Filtrationsvorgang vollständig zu reinigen. Nach der Spülphase werden Ventile 116 und 115 geöffnet, während alle anderen Ventile geschlossen sind, und ein neuer Filtrationsvorgang beginnt, indem die Feststoffe enthaltene zulaufende Flüssigkeit durch das Bett geleitet und die an Feststoffen verarmte Flüssigkeit über Leitung 106 abgezogen wird.

Im Gegensatz zu Figur 1, in der ein Filterbett mit Polyurethanteilchen dargestellt ist, das während der Regenerierung in dem Filtrierbehälter zurückbehalten wird, zeigt Figur 2 ein System, bei dem die Filterbett-Polyurethanteilchen aus dem Filtrierbehälter entfernt und in einen Regenerierbehälter befördert werden, in dem sie vor ihrer Rückführung in den Filtrierbehälter regeneriert werden.

In dem System gemäß Figur 2 ist das Filterbett mit Polyurethanteilchen 203 in einem langgestreckten, vertikalen Filtrierbehälter 202 mit konstanter Querschnittsfläche angeordnet. Anfangs sind alle Ventile des Behandlungssystems geschlossen, mit Ausnahme von Ventil 215 in einer Einlaßleitung 200 und Ventil 247 in einer Auslaßleitung 248. Über Leitung 200 läuft eine Feststoffe enthaltende Flüssigkeit zu und tritt über einen Sprühverteiler 201 in den Filtrierbehälter 202 ein, um das Filterbett mit Polyurethanteilchen 203 von oben nach unten zu durchströmen. Dabei bildet sich eine an Feststoffe verarmte Flüssigkeit, die über eine Unterlage 204 in den Füllraum 205 des Filtrierbehälters fließt, um von dort über Leitung 248 abgezogen zu werden. Diese Verfahrensweise wird wiederholt, bis das Filterbett mindestens teilweise mit abgeschiedenen Feststoffen beladen ist, woraufhin die Ventile 215 und 247 geschlossen werden.

Zum Regenerieren der Filterbett-Polyurethanteilchen wird eine Pumpe 241 aktiviert und die Polyurethanteilchen des Filterbettes gelangen über Leitung 240 aus dem Filtrierbehälter 202 in einen Regenerierbehälter 250. In dem Regenerierbehälter 250 werden die Polyurethanteilchen auf eine Unterlage 251 aufgebracht. Nachdem alle Polyurethanteilchen aus dem Filtrierbehälter 202 in den Regenerierbehälter 250 befördert worden sind, wird die Pumpe 241 deaktiviert. Anschließend wird Ventil 214 in Leitung 213 geöffnet und ein bis fünf Bettvolumen an Regenerierflüssigkeit werden über Leitung 213 und Leitung 222 in den Regenerierbehälter eingeführt; dann wird Ventil 214 geschlossen. Als nächstes wird Ventil 218 in einer Gaszuführungsleitung 217 geöffnet und Gas, z.B. Luft, in einer Menge von 0,15 bis 1,5 m³/min m² Querschnittsfläche über Leitung 217 einem Verteiler 219, der unterhalb der Unterlage 251 angeordnet ist, zugeführt. Auf diese Weise wird das Gas durch die Regenerierflüssigkeit mit dem Polyurethanteilchen in solchen Maße durchgeblasen, daß die Regenerierflüssigkeit und die Polyurethanteilchen durcheinander bewegt werden und sich die abgeschiedenen Feststoffe von den Polyurethanteilchen lösen und in die Regenerierflüssigkeit unter Bildung einer an Feststoffen angereicherten Regenerierflüssigkeit übergehen. Ein Entlüftungsventil 150 ist in einer Entlüftungsleitung 151 am oberen Ende des Regenerierbehälters 250 angebracht. Über das Entlüftungsventil 150 kann ein im Regenerierbehälter infolge des Durchblasens mit Luft auftretender Überdruck vermindert werden.

Nachdem das Durchblasen des Gases eine bestimmte Zeit, z.B. 2 bis 3 Minuten angedauert hat, wird Ventil 221 in einer Abwasser-Ableitung 220 geöffnet und die mit Feststoffen angereicherte Regenerierflüssigkeit wird aus dem Regenerierbehälter 250 abgezogen. Im Anschluß daran können weitere Regenerationszyklen notwendig sein. Dazu wird jeweils weder Regenerierflüssigkeit über Leitung 213 und Leitung 222 in den Regenerierbehälter geführt und Gas aus Leitung 217 durch die Regenerierflüssigkeit und die Polyurethanteilchen durchgeblasen, sowie die mit Feststoffen angereicherte Regenerierflüssigkeit abgezogen. Beim letzten Regenerationszyklus wird nur soviel von der an Feststoffen angereicherten Regenerierflüssigkeit abgezogen, daß nicht mehr als ein Bettvolumen an mit Feststoffen angereicherter Regenerierflüssigkeit bei den Polyurethanteilchen in dem Behälter verbleibt. An dieser Stelle des Zyklus sind alle Ventile geschlossen. Anschließend werden die Ventile 245 und 216 gleichzeitig geöffnet und die Polyurethanteilchen in dem Regenerierbehälter mit ein bis fünf Bettvolumen an suspendierte Feststoffe enthaltender, über Leitung 200 und Leitung 246 zulaufender Flüssigkeit gespült. Nachdem das erforderliche Volumen an Spülflüssigkeit über die Leitung 246 in den Regenerierbehälter 250 geführt ist, wird Ventil 245 in der Leitung 246 geschlossen. Die Spülflüssigkeit gelangt dann aus dem Regenerierbehälter 250 über Leitung 222 und Leitung 206 zurück in die Einlaßleitung 200. Daraufhin wird Ventil 243 geöffnet, wodurch die nunmehr vollständig regenerierten Polyurethanteilchen infolge der Schwerkraft über Leitung 242 in den Filtrierbehälter 202 gelangen. Wenn sich alle Polyurethanteilchen wieder in dem Filtrierbehälter 202 befinden, wird Ventil 243 geschlossen, sowie die Ventile 215 und 247 wieder geöffnet, und der Filtriervorgang erneut begonnen.

Auch bei dieser Verfahrensweise besteht erfindungsgemäß die Möglichkeit, gegebenenfalls zusätzlich zu dem Durchblasen mit Luft die Regenerierflüssigkeit und die Polyurethanteilchen mit Hilfe einer, gestrichelt dargestellten, Mechanischen Rührvorrichtung, die aus Flügeln 259, einer Welle 258 und einem Antriebsmotor 257 besteht, mechanisch durcheinander zu bewegen, so daß die abgeschiedenen Feststoffe sich von den Polyurethanteilchen lösen und in die Regenerierflüssigkeit unter Bildung einer an Feststoffen angereicherten Regenerierflüssigkeit übergehen.

**Patentansprüche**

1. Verfahren zum Regenerieren eines zum Beseitigen von Feststoffen aus einer suspendierte Feststoffe enthaltenden Flüssigkeit dienenden Filterbetts aus Polyurethanteilchen, bei dem nach einer mindestens teilweisen Beladung des Filterbetts mit abgeschiedenen Feststoffen eine Regenerierflüssigkeit in den Filterbehälter eingeleitet wird, die Regenerierflüssigkeit und die Polyurethanteilchen zumindest zeitweise mechanisch in dem Maß durcheinander bewegt werden, daß die abgeschiedenen Feststoffe sich von den Polyurethanteilchen lösen und in die Regenerierflüssigkeit unter Bildung einer an Feststoffen angereicherten Regenerierflüssigkeit übergehen, und bei dem anschließend eine an Feststoffen angereicherte Regenerierflüssigkeit aus dem Filterbehälter abgezogen wird, dadurch gekennzeichnet, daß das 1- bis 5-fache des Bettvolumens an Regenerierflüssigkeit in den Filterbehälter eingeleitet wird, zum Durcheinanderbewegen von Regenerierflüssigkeit und Polyurethanteilchen durch die Regenerierflüssigkeit ein Gas in einer Menge von 0,15 bis 1,5 Querschnittsfläche des Filterbettes durchgeblasen wird, zur Bildung des Filterbettes Polyurethanteilchen aus offenporigem Polyurethanschaum mit 4 bis 40 Zellen/cm und mit einer Luftdurchlässigkeit von 24 bis 76 $m^3$ Luft/min $m^2$ verwendet werden und daß das Abziehen der an Feststoffen angereicherten Regenerierflüssigkeit aus dem Filterbehälter in einer Menge von 4 bis 16 Querschnittsfläche des Filterbettes durchgeführt wird.

2. Verfahren nach Anspruch 1, dadurch gekennzeichnet, daß zum Durcheinanderbewegen von Regenerierflüssigkeit und Polyurethanteilchen durch die Regenerierflüssigkeit ein Gas in einer Menge von 0,3 bis 0,6 $m^3$/min $m^2$ Querschnittsfläche des Filterbettes durchgeblasen wird, zur Bildung des Filterbettes Polyurethanteilchen aus offenporigem Polyurethanschaum mit 12 bis 24 Zellen/cm und mit einer Luftdurchlässigkeit von 30 bis 52 $m^3$ Luft/ min $m^2$ verwendet wird und daß das Abziehen der an Feststoffen angereicherten Regenerierflüssigkeit aus dem Filterbett in einer Menge von 8 bis 12 l/min $dm^2$ Querschnittsfläche des Filterbettes durchgeführt wird.

3. Verfahren nach Anspruch 1 oder 2, dadurch gekennzeichnet, daß nacheinander mehrere Regenerationszyklen durchgeführt werden.

4. Verfahren nach Anspruch 3, dadurch gekennzeichnet, daß beim letzten Regenerationszyklus nur soviel von der an Feststoffen angereicherten Regenerierflüssigkeit abgezogen wird, daß nicht mehr als ein Bettvolumen an mit Feststoffen angereicherter Regenerierflüssigkeit in dem Filterbehälter verbleibt, und daß die Polyurethanteilchen mit ein bis fünf Bettvolumen, vorzugsweise ein bis zwei Bettvolumen, an suspendierte Feststoffe enthaltender, zulaufender Flüssigkeit vor Wiederbeginn des Filtrationsvorganges gespült werden.

5. Verfahren nach Anspruch 1, dadurch gekennzeichnet, daß das Durchblasen des Gases durch die Regenerierflüssigkeit 0,5 bis 5 min, vorzugsweise 1 bis 2 min lang durchgeführt wird.

6. Verfahren nach einem der Ansprüche 1 bis 5, dadurch gekennzeichnet, daß die Polyurethanteilchen zum Regenerieren aus dem Filterbehälter abgezogen und in einen Regenerierbehälter gefördert werden.

**Claims**

1. A method of regenerating a filter bed which consists of polyurethane particles and which serves to remove solids from a liquid containing solids in suspension, in which, after the filter bed has been at least partially loaded with separated solids, a regenerating liquid is introduced into the filter container, the regenerating liquid and the polyurethane particles are at least temporarily mechanically stirred together to an extent such that the separated solids are separated from the polyurethane particles and transferred to the regenerating liquid with the formation of a regenerating liquid which is enriched with solids, and in which a regenerating liquid enriched with solids is subsequently withdrawn from the filter container, <u>characterised in</u> that from one to five the bed volume of the regenerating liquid is introduced into the filter container; a gas for stirring together the regenerating liquid and the polyurethane particles is blown through the regenerating liquid, in an amount of 0.15 to 1.5 of the cross-sectional area of the filter bed; to form the filter bed, polyurethane particles consisting of open-pore polyurethane foam with 4 to 40 cells/cm and a permeability to air of 24 to 76 $m^3$ air/min $m^2$, are used; and that the withdrawal of the regenerating liquid enriched with solids from the filter container is carried out in an amount of 4 to 16 of the cross-sectional area of the filter bed.

2. A method as claimed in Claim 1, <u>characterised in</u> that in order to stir together the regenerating liquid and the polyurethane particles, a gas in an amount of 0.3 to 0.6 $m^3$/min $m^2$ of the cross-sectional area of the filter bed is blown through the regenerating liquid; to form the filter bed, polyurethane particles which consist of open-pore polyurethane foam with 12 to 24 cells/cm and a permeability to airof 30 to 52 $m^3$ air/min $m^2$ is used; and that the withdrawal of the regenerating liquid enriched with solids, from the filter bed is carried out in an amount of 8 to 12 l/min $dm^2$ of the cross-sectional area of the filter bed.

3. A method as claimed in Claim 1 or Claim 2, <u>characterised in</u> that a plurality of regenerating cycles are consecutively carried out.

4. A method as claimed in Claim 3, <u>characterised in</u> that, during the last regenerating cycle, the regenerating liquid enriched with solids is only withdrawn to an extent such that no more than one bed volume of regenerating liquid enriched with solids remains in the filter container; and that, prior to the recommencement of the filtration operation, the polyurethane particles are rinsed with an added liquid containing one to five bed volumes, preferably one to two bed volumes, of suspended solids.

5. A method as claimed in Claim 1, characterised in that the gas is blown through the regenerating liquid for 0.5 to 5 min, preferably 1 to 2 min.

6. A method as claimed in one of Claims 1 to 5, characterised in that the polyurethane particles are withdrawn from the filter container for regeneration and transferred into a regenerating container.

**Revendications**

1.- Procédé de régénération d'un lit de filtration en particules polyuréthane servant à l'élimination de matières solides d'un liquide contenant des matières solides en suspension, dans lequel, après une charge au moins partielle du lit de filtration par des matières solides déposées, on introduit un liquide de régénération dans le récipient de filtration, on brasse mécaniquement au moins temporairement le liquide de régénération et les particules de polyuréthane, les matières solides déposées se séparant des particules de polyuréthane et passant dans le liquide de régénération pour former un liquide de régénération enrichi en matières solides, et dans lequel on soutire ensuite, de ce récipient de filtration, un liquide de régénération enrichi en matières solides, caractérisé en ce que l'on introduit dans le récipient de filtration un volume de 1 à 5 fois le volume du lit en liquide de régénération, pour le brassage du liquide de régénération et des particules de polyuréthane, on injecte par insufflation dans le liquide de régénération un gaz avec un débit de 0,15 à 1,5 fois la section transversale du lit de filtration, on utilise pour la formation du lit de filtration des particules de polyuréthane en mousse de polyuréthane à pores ouverts avec 4 à 40 cellules au cm et avec une perméabilité à l'air de 24 à 76 $m^3/min/m^2$, et en ce que l'on soutire le liquide de régénération enrichi en matières solides du récipient de filtration avec un débit de 4 à 16 $l/min/dm^2$ de section transversale du lit de filtration.

2.- Procédé selon la revendication 1, caractérisé en ce que, pour le brassage du liquide de régénération et des particules de polyuréthane, on injecte par soufflage à travers le liquide de régénération un gaz avec un débit de 0,3 à 0,6 $m^3/min/m^2$ de section transversale du lit de filtration, pour la formation du lit de filtration, on utilise des particules de polyuréthane en une mousse de polyuréthane à pores ouvertes avec 12 à 24 cellules au cm et avec une perméabilité à l'air de 30 à 52 $m^3$ d'air/min/$m^2$ et en ce qu'on soutire le liquide de régénération enrichi en matières solides hors du lit de filtration avec un débit de 8 à 12 $l/min/dm^2$ de section transversale du lit de filtration.

3.- Procédé selon la revendication 1 ou 2, caractérisé en ce que l'on effectue successivement plusieurs cycles de régénération.

4.- Procédé selon la revendication 3, caractérisé en ce que, lors du dernier cycle de régénération, on soutire juste assez du liquide de régénération enrichi en matières solides pour qu'il ne reste pas plus d'un volume de lit du liquide de régénération enrichi en matières solides dans le récipient de filtration, et en ce qu'on lave, avant la reprise du processus de filtration, les particules de polyuréthane avec de 1 à 5 fois, de préférence de 1 à 2 fois, le volume du lit d'un liquide circulant contenant des matières solides en suspension.

5.- Procédé selon la revendication 1, caractérisé en ce que le soufflage du gaz à travers le liquide de régénération est effectué pendant 0,5 à 5 minutes, de préférence 1 à 2 minutes.

6.- Procédé selon une des revendiscations 1 à 5, caractérisé en ce; que, pour la régénération, on retire les particules de polyuréthane du récipient de filtration et on les transporte dans un récipient de régénération.

Fig. 1

Fig. 2

1